(19) Europäisches Patentamt
European Patent Office
Office européen des brevets

(11) **EP 3 588 137 B1**

(12) **FASCICULE DE BREVET EUROPEEN**

(45) Date de publication et mention
de la délivrance du brevet:
**30.03.2022 Bulletin 2022/13**

(21) Numéro de dépôt: **19177846.3**

(22) Date de dépôt: **03.06.2019**

(51) Classification Internationale des Brevets (IPC):
**G01S 13/93** (2020.01)   **G01S 13/78** (2006.01)
**G01S 13/76** (2006.01)

(52) Classification Coopérative des Brevets (CPC):
**G01S 13/762; G01S 13/782; G01S 13/933**

(54) **PROCÉDÉ DE DÉTECTION ET DE LOCALISATION DE FAUSSES CIBLES ADS-B ET SYSTÈME DE RADARS SECONDAIRES METTANT EN OEUVRE UN TEL PROCÉDÉ**

VERFAHREN ZUR DETEKTION UND LOKALISATION FALSCHER ADS-B-ZIELE, UND SYSTEM MIT SEKUNDÄRRADAREN, DAS DIESES VERFAHREN UMSETZT

METHOD FOR DETECTING AND LOCATING FALSE ADS-B TARGETS AND SECONDARY RADAR SYSTEM IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2018 FR 1800657**

(43) Date de publication de la demande:
**01.01.2020 Bulletin 2020/01**

(73) Titulaire: **Thales**
**92400 Courbevoie (FR)**

(72) Inventeur: **BILLAUD, Philippe**
**91470 LIMOURS (FR)**

(74) Mandataire: **Marks & Clerk France**
**Immeuble "Visium"**
**22, avenue Aristide Briand**
**94117 Arcueil Cedex (FR)**

(56) Documents cités:
**EP-A1- 2 960 671       EP-A1- 3 088 911**
**US-A1- 2006 119 515     US-A1- 2011 215 963**

- **MARIANO PAOLO ET AL: "Data integrity augmentation by ADS-B SSR hybrid techniques", 2018 INTEGRATED COMMUNICATIONS, NAVIGATION, SURVEILLANCE CONFERENCE (ICNS), IEEE, 10 avril 2018 (2018-04-10), XP033358026, DOI: 10.1109/ICNSURV.2018.8384893**
- **MARIANO PAOLO ET AL: "Data integrity augmentation by ADS-B SSR hybrid techniques", 2018 INTEGRATED COMMUNICATIONS, NAVIGATION, SURVEILLANCE CONFERENCE (ICNS), IEEE, 10 avril 2018 (2018-04-10), pages 1-15, XP033358119, DOI: 10.1109/ICNSURV.2018.8384986**

**Description**

La présente invention concerne un procédé de détection et de localisation par un radar secondaire de générateur de fausses informations ADS-B. Elle concerne également un système de radars secondaires mettant en œuvre un tel procédé.

Le domaine de l'invention est le contrôle du trafic aérien (ATC) pour lequel l'augmentation du taux de rafraîchissement de la position des cibles, entre autre, est un moyen de rapprocher les avions et ainsi d'accroitre le débit des avions au décollage et à l'atterrissage. Des informations de position fournies par les avions ne sont pas déclenchées en réponse de signaux d'interrogation radar mais sont émises automatiquement depuis des moyens d'émissions des avions. Ces informations de position non déclenchées sont appelées « squitters » et plus particulièrement squitter ADS-B_out selon l'expression « Automatic Dépendent Surveillance - Broadcast ».

Les « squitters » ADS-B_out sont émis sur une période de l'ordre d'une seconde et permettent donc potentiellement un taux de rafraîchissement des positions des cibles meilleur que deux secondes, à comparer à la période classique d'un radar de l'ordre de 4 à 6 secondes.

Un principal défaut de l'information ADS-B_out est de ne pas être protégée par conception du protocole Mode S, aussi employé par le radar Mode S, protocole sur lequel s'appuie l'information ADS-B_out. En conséquence, il est aisé et peu cher de simuler des faux d'aéronefs émettant des faux squitters (« spoofer ») à base de machines informatiques bas de gamme au sol générant des messages ADS-B_out comme le ferait un véritable aéronef. Des organisations mal intentionnées peuvent ainsi semer une véritable désorganisation dans l'ATC, allant même jusqu'à provoquer des incidents ou des accidents entre avions réels.

En raison de cette fragilité, dans la pratique l'ADS-B_out n'est généralement pas exploité seul opérationnellement en contrôle aérien.

Une solution de détection des squitters ADS-B en exploitant la WAM (Wide Area Multilateration) a été proposée dans la littérature. Les limites associées à cette solution sont celles de la WAM. Le coût au mètre carré couvert est important et la couverture géographique est limitée. Enfin, elle provoque une pollution électromagnétique due à l'emploi d'antennes de petites tailles donc non focalisées.

Un but de l'invention est notamment de pallier les inconvénients précités. A cet effet, l'invention a pour objet un procédé de détection et de localisation de générateurs de spoofers ADS-B par un système radars comportant au moins un radar secondaire, un spoofer ADS-B étant un faux squitter ADS-B, un squitter ADS-B étant un signal d'information de position d'aéronef émise à destination de récepteurs dont les récepteurs des radars dudit système, lesdits squitters ADS-B étant détectés au cours du temps à différents gisements de l'antenne, ledit procédé comportant, pour chaque radar secondaire, au moins les étapes suivantes :

- une première étape de détection d'un spoofer ADS-B ;
- une deuxième étape de localisation de la position en azimut dudit générateur de spoofer ADS-B, ladite deuxième étape comportant les opérations suivantes :

  • mesure de l'azimut de l'antenne du radar secondaire et des puissances reçues sur les diagrammes somme, différence et contrôle de l'antenne lors de la détection d'un squitter ADS-B ;
  • génération et stockage d'au moins une hypothèse d'azimut dudit spoofer pour chaque squitter ADS-B détecté, ladite hypothèse étant égale à la somme de l'azimut de ladite antenne et d'une hypothèse de gisement estimé dudit spoofer, ledit gisement estimé étant caractérisé par le rapprochement entre le couple des rapports de la puissance reçue sur le diagramme somme sur la puissance reçue sur le diagramme de contrôle d'une part et par le rapport de la puissance reçue sur le diagramme différence sur la puissance reçue sur le diagramme de contrôle d'autre part et les mêmes couples pour les différents gisements possibles connus de l'antenne

et que ladite deuxième étape réalise en outre une accumulation desdites hypothèses sur une période de temps donnée, l'azimut dudit spoofer ADS-B étant fonction desdites hypothèses.

Dans un mode de mise en œuvre particulier, ledit système radars comportant au moins deux radars secondaires, ledit procédé comprend une troisième étape de localisation en distance dudit générateur de spoofer ADS-B, ladite troisième étape croisant les secteurs angulaires d'azimut de chaque radar secondaire, la distance dudit générateur de spoofer ADS-B à un radar étant la distance de ladite intersection audit radar, un secteur angulaire d'azimut étant un secteur angulaire centré sur l'azimut obtenu dans ladite deuxième étape.

L'écart angulaire de ladite intersection donne par exemple la précision de localisation en azimut dudit générateur de spoofer ADS-B.

La génération desdites hypothèses d'azimut utilise par exemple plusieurs tolérances d'écart parmi :

- la précision de mesure de ladite puissance ;

- le nombre d'hypothèses accumulées ;
- la précision du relevé des diagrammes d'antenne.

Lesdites hypothèses d'azimut de spoofer ADS-B utilisent par exemple en parallèle plusieurs précisions en azimut desdits diagrammes d'antenne, l'azimut étant défini selon des pas, le pas d'azimut pour localiser un générateur de spoofer en mouvement étant plus important que pour localiser un générateur fixe.
Dans ladite deuxième étape, lesdites hypothèses sont par exemple accumulées :

- sur un temps donné pour localiser un générateur de spoofer ADS-B fixe ;
- sur un temps plus court pour localiser un générateur de spoofer ADS-B en mouvement.

Dans ladite deuxième étape, lesdites hypothèses dudit spoofer ADS-B au niveau d'un radar sont par exemple élaborées à la fois en azimut et en élévation en exploitant en parallèle plusieurs hypothèses basées sur plusieurs diagrammes d'antenne en azimut selon différentes coupes en élévation.
Dans ladite troisième étape, ledit système comportant au moins trois radars secondaires, ledit spoofer ADS-B est par exemple localisé en azimut, distance et altitude par l'intersection de secteurs angulaires solides de chaque radar secondaire, un secteur angulaire solide étant un secteur d'angle solide centré sur l'azimut et sur l'élévation obtenus dans ladite deuxième étape.
Dans ladite troisième étape la localisation dudit spoofer ADS-B est par exemple effectuée en fonction de :

- la qualité de la localisation définie à ladite deuxième étape ;
- l'incertitude sur ladite localisation définie par chacun desdits radars ;
- la distance dudit spoofer ADS-B vis-à-vis de chacun desdits récepteurs.

Ladite première étape est par exemple mise en œuvre par des moyens de détection extérieurs audit systèmes radars.
L'invention a également pour objet un radar secondaire mettant en œuvre au moins les deux premières étapes du procédé tel que décrit précédemment.
L'invention a encore pour objet un système de radars secondaires, comportant au moins deux radars du type précédent et des moyens de traitement aptes à communiquer avec lesdits radars et aptes à mettre en œuvre ladite troisième étape du procédé telle que décrite précédemment. Lesdits moyens de traitement sont par exemple incorporés dans un desdits radars.
D'autres caractéristiques et avantages de l'invention apparaîtront à l'aide de la description qui suit faite en regard de dessins annexés qui représentent :

- La figure 1, un exemple de synoptique d'un radar secondaire mode S ;
- La figure 2, un exemple de mise en œuvre matérielle de l'invention sur le synoptique du radar de la figure 1 ;
- Les figures 3a à 3j, une illustration d'un mode de mise en œuvre d'une étape du procédé selon l'invention ;
- La figure 4, une illustration de la précision de détection et de localisation azimut d'un spoofer ;
- Les figures 5a à 5c, une illustration de la mise en œuvre d'une troisième étape possible du procédé selon l'invention.

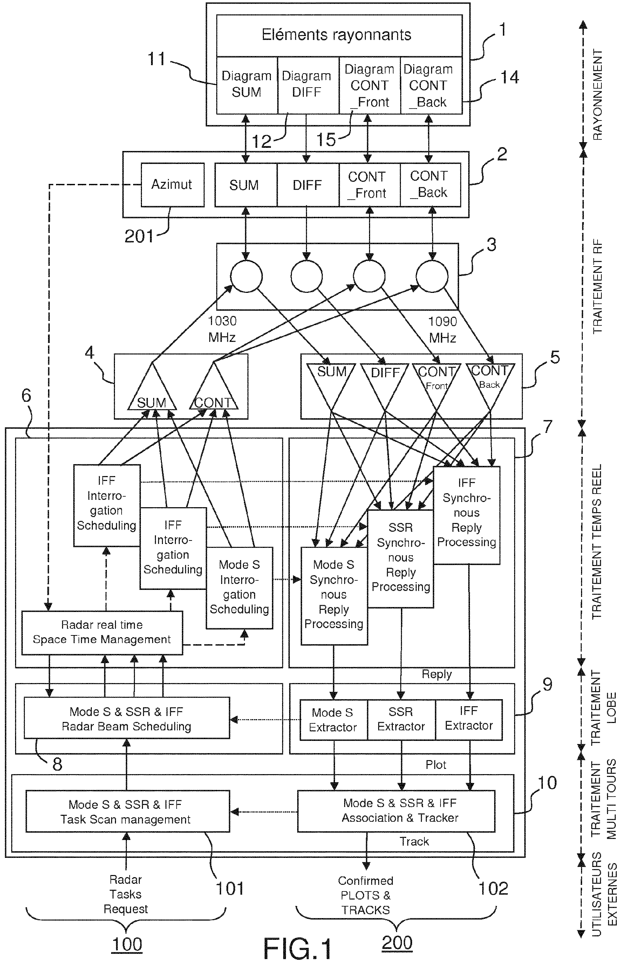

En regard de la figure 1 qui présente un exemple de synoptique d'un radar secondaire Mode S, on rappelle les principes d'un tel radar. Ce principe (les échanges Mode S entre interrogateur et aéronef étant définis en détail par l'ICAO Annexe 10 vol.4) consiste à :

- émettre des interrogations sélectives :

  • soit indiquant le destinataire : une seule cible désignée par son adresse Mode S (champ de 24bits) ;
  • soit indiquant l'identifiant de l'émetteur (Identifier Code _IC) ;

- recevoir des réponses sélectives :

  • indiquant l'identifiant de l'émetteur : la même adresse Mode S de la cible ;
  • dont le contenu principal dépend du message :

    o DF4 : définissant l'altitude ;
    o DF5 : définissant l'identité (code A) ;
    o **DF20** : définissant l'altitude plus le registre BDS dont le numéro est connu notamment par l'interrogation qui l'a sollicité ;
o **DF21** : définissant l'identité (code A) plus le registre BDS dont le numéro est connu en autre par l'interrogation qui l'a sollicité.

Dans la suite de la description nous considèrerons principalement le radar sous l'aspect du protocole Mode S qu'il ait ou non les capacités de traiter aussi les protocoles SSR et IFF non intervenants dans le brevet mais néanmoins présents dans la configuration la plus compète d'un radar de surveillance secondaire.

Dans son emploi usuel, le radar secondaire fonctionne en mode synchrone, c'est-à-dire qu'il émet une interrogation et attend une réponse en cohérence avec celle-ci, ce qui lui permet de localiser par mesure (en azimut et distance) et d'identifier (par l'adresse mode S) la cible.

Pour effectuer cette tâche avec performance, le radar est équipé d'une antenne 1 ayant plusieurs diagrammes 11, 12, 14, 15 dont les rôles sont classiquement :

- un diagramme somme 11, noté par la suite SUM, pour interroger et détecter la réponse synchrone de la cible ;
- un diagramme différence 12, noté DIFF, pour localiser finement la cible dans le faisceau SUM ;
- un premier diagramme de contrôle 15, noté CONT_front, pour bloquer et réjecter les réponses issues de cibles face à l'antenne non présentes dans le faisceau principal de SUM mais interrogées par un lobe secondaire de SUM ;
- un deuxième diagramme de contrôle 14, noté CONT_back, pour bloquer et réjecter les réponses issues de cibles au dos à l'antenne (donc forcément non présentes dans le faisceau de SUM mais interrogées par des fuites de lobe frontal de SUM).

Selon les missions et donc les performances attendues du radar les antennes peuvent être :

- de plusieurs diagrammes :

  • 4 diagrammes : SUM, DIFF, CONT_Front & CONT_Back ;
  • 3 diagrammes : SUM, DIFF, CONT (CONT_Front et CONT_Back sont regroupés au niveau de l'antenne) ;
  • 2 diagrammes : SUM, DIFF/CONT (DIFF, CONT_Front & CONT_Back sont regroupés au niveau de l'antenne).

- de dimensions différentes :

  - en largeur :
    o ayant une grande largeur pour avoir un faisceau principal fin apportant un fort gain ainsi que pour être sélective et précise en azimut ;
  - en hauteur :

    o ayant une grande hauteur, de type Large Vertical Aperture (LVA) apportant du gain et une protection contre les réflexions sol (principalement en ATC) ;
    o ayant une petite hauteur, de type « poutre » apportant une mobilité (principalement en IFF).

Alors que les diagrammes SUM et DIFF sont classiquement fins avec des lobes à 3 dB entre 2,4° à 10°, les diagrammes CONT_Front et CONT_Back cherchent à couvrir pratiquement 180° respectivement chacun.

Les antennes peuvent aussi être :

- de diagramme fixe, dites « mécaniques » et tournantes ;
- de diagramme évolutif, à balayage électronique, dites « AESA » fixes ou tournantes.

Dans le texte à suivre du brevet, on décrit la configuration antennaire la plus complète, soit 4 diagrammes en antenne rotative, sachant que les autres configurations se traitent de façon similaire quelque soit le nombre de diagrammes d'antennes exploités que l'antenne soit tournante ou fixe. Pour simplifier la description, on pourra cependant utiliser la configuration à 3 diagrammes en utilisant CONT à la place de CONT_Front et CONT_Back.

Le principe fondamental du récepteur de squitter ADS-B utilisant le même protocole mode S (messages définis en détail par l'ICAO Annexe 10 vol.4) consiste à :

- recevoir des Réponses Sélectives Non Sollicitées donc Asynchrones :

  • indiquant l'identifiant de l'émetteur : la même adresse Mode S (champ de 24bits) de la cible que celle transmise au radar lors des interrogations et réponses sélectives décrites ci-avant

- la nature du contenu du message (DF=17) dont la nature est variable selon le champ TC du message :

  o 1 à 4 "Aircraft identification"
  o 5 à 8 "Surface position"
  o 9 à 18 "Airborne position (Baro Alt)"
  o 19 "Airborne velocities "
  o 20 à 22 "Airborne position (GNSS Height)"
  o 23 "Test message"
  o 24 "Surface system status"
  o 25 à 27 "Reserved"
  o 28 "Extended squitter AC status"
  o 29 "Target state and status (V.2)"
  o 30 "Reserved "
  o 31 "Aircraft Operation status".

La liste ci-dessus est donnée à titre d'exemple, elle est indicative et évolutive.

Dans son emploi usuel, un récepteur ADS-B_in fonctionne donc en mode asynchrone, c'est-à-dire qu'il écoute sur 360° un message mode S très similaire à celui du radar pour la localisation (azimut et distance) et l'identification (adresse mode S) d'une cible.

Pour effectuer cette tâche avec performance, le récepteur ADS-B_in est équipé :

- soit d'une antenne omnidirectionnelle couvrant 360°, ce qui est une configuration courante ;
- soit de plusieurs antennes de large diagramme couvrant 360° au total:

  • deux antennes de couverture supérieure 180° dos à dos, qui est configuration la plus répandue ;
  • plus rarement de trois antennes de couverture supérieure à 120° ou encore quatre antennes de couverture supérieure à 90° ;

dont le rôle est uniquement, par un diagramme unique (de type somme), de détecter la réponse asynchrone de la cible et d'en décoder le contenu, selon les formats rappelés ci-dessus.

Etant donné que le radar secondaire et le récepteur ADS-B_in exploitent des messages quasi identiques (même fréquence 1090MHz, même forme d'onde, même structure de données du message de la réponse) il est aisé d'intégrer au radar la fonction d'écoute des squitters ADS-B asynchrones en écoutant ceux-ci par les différents diagrammes de l'antenne du radar et cela principalement, mais pas uniquement, par le diagramme omnidirectionnel :

- soit par une fonction réception associée à un diagramme d'antenne omnidirectionnel : CONT ;
- soit par deux récepteurs chacun associés à un des deux diagrammes d'antenne semi-omnidirectionnels : CONT_front & CONT_Back.

L'écoute des squitters ADS-B peut-être complétée en exploitant en détection aussi les diagrammes SUM voire SUM et DIFF en complément de CONT. Il est à noter que seule l'analyse du message ADS-B est spécifique à de l'ADS-B. Tout le reste est commun, notamment les câbles de descente d'antenne, le joint tournant si le radar est tournant, la transposition des signaux 1090 MHz en bande de base et ceci pour tous les diagrammes d' d'antenne du radar.

Avant de décrire plus en détail l'invention, on décrit les éléments constitutifs du radar Mode S de la figure 1. Le synoptique fait apparaître le fonctionnement synchrone du radar Mode S :

- sur la partie gauche 100 par la génération des interrogations ;
- sur la partie droite 200 par le traitement synchrone des réponses associées,

ainsi que les synchronisations entre celles-ci par les flèches transverses entre gauche et droite.

Les fonctions des principaux éléments sont rappelées ci-après :
L'antenne 1 assure le rayonnement des interrogations à 1030 MHz et des réponses en retour à 1090 MHz, selon les quatre diagrammes : SUM, DIFF, CONT_Front et CONT_Back, ou trois diagrammes (SUM, DIFF, CONT). ou selon deux diagrammes (SUM, DIFF/CONT).

Un joint tournant 2 et des câbles de descente d'antenne, pour une antenne rotative, assurent :

- le couplage RF des signaux transmis à 1030 MHz et reçus à 1090 MHz indépendamment pour les quatre diagrammes entre la partie tournante et la partie fixe du radar ;

- la diffusion de la position en azimut 201 de l'axe du lobe principal de l'antenne.

Un traitement RF comporte :

- un duplexeur ou circulateur 3 assurant le couplage RF entre les signaux transmis à 1030 MHz et reçus à 1090 MHz indépendamment pour les quatre diagrammes ;
- un émetteur 4 assurant :

  - la transmission des interrogations à 1030 MHz sur le diagramme SUM ;
  - le blocage des transpondeurs en dehors du lobe SUM à 1030 MHz par les diagrammes CONT_Front et CONT_Back ;
  - ceci pour les différents protocoles secondaires : IFF, SSR et Mode S ;

- un récepteur 5 assurant la réception des réponses à 1090 MHz sur les quatre diagrammes SUM, DIFF, CONT_Front et CONT_Back, pour les différents protocoles secondaires : IFF, SSR et Mode S.

Un traitement temps réel comporte :

- une gestion spatio-temporelle 6 assurant la gestion temps réel des périodes d'interrogations et d'écoutes associées pour les différents protocoles secondaires : IFF, SSR et Mode S ;
- un traitement du signal 7 assurant :

  - le traitement des réponses dans les périodes d'écoutes associées aux interrogations pour les différents protocoles secondaires : IFF, SSR et Mode S ;
  - la détection et le décodage des réponses Synchrones dans le lobe principal de l'antenne en exploitant les quatre diagrammes :

    o SUM : pour détecter les réponses reçues dans le lobe principal ;
    o DIFF : pour localiser finement en azimut les réponses reçues dans le lobe principal SUM et éventuellement pour la détection ;
    o CONT_Front et CONT_Back : pour réjecter les réponses reçues sur les lobes secondaires de SUM et DIFF dans le cas d'une détection dans le lobe principal de DIFF.

Un traitement dans le lobe principal de l'antenne comporte :

- une gestion 8 des cibles présentes dans le lobe, assurant :

    o la préparation des transactions (interrogations et réponses) à effectuer dans le prochain lobe pour les différents protocoles secondaires IFF, SSR et Mode S ;
    o le placement des interrogations et réponses Mode S dans la future période « Roll call » en fonction de l'état des transactions venant d'être effectuées.

- des extracteurs 9 assurant la constitution de plots pour chacun des différents protocoles secondaires IFF, SSR et Mode S, à partir des réponses synchrones reçues dans le lobe selon le protocole employé lors des interrogations.

Un traitement multi tours 10 comporte :

- une gestion 101 des tâches Mode S à effectuer avec les cibles dans la couverture, assurant la prédiction de positions des cibles (rendez-vous d'antenne) et la préparation des tâches à effectuer avec ces positions selon les demandes internes, externes et l'état des transactions des tours précédents ;
- une association des plots et un pistage 102 des cibles dans la couverture assurant le pistage des cibles pour améliorer les performances (élimination des faux plots, contrôle de données décodées notamment) et pour prédire la position future de celles-ci.

Une interface avec les utilisateurs permet la prise en compte par le radar de différentes requêtes et de visualiser les plots et les poursuites de cibles.

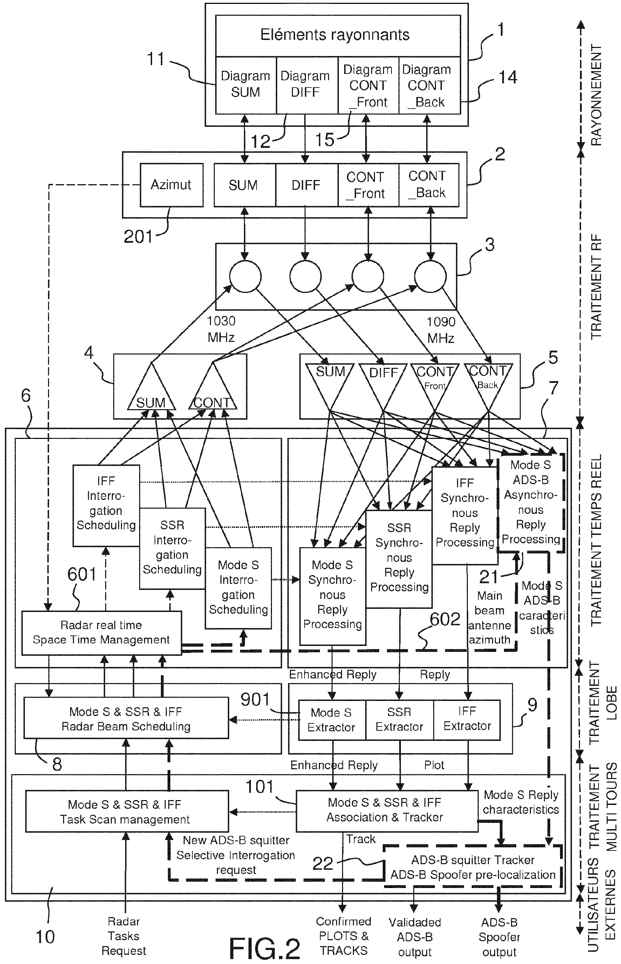

La figure 2 illustre la mise en œuvre matérielle de l'invention en présentant le synoptique du radar de la figure 1 augmenté des éléments propres à l'invention. Ces éléments sont représentés en traits discontinus.

Alors que le fonctionnement du radar mode S est synchrone, la figure 2 montre que les traitements ajoutés pour l'invention ne sont pas liés à l'émission et n'exploitent que la position en azimut de l'axe du lobe principal de l'antenne.

La plupart des éléments restent inchangés, vérifiant en cela la non intrusion de l'invention dans le fonctionnement opérationnel du radar mode S. En particulier, on ajoute des interrogations sélectives vers le spoofer ADS_B pour tenter de le localiser de façon synchrone avec le radar selon le mode de fonctionnement classique d'un radar mode S comme pour toute nouvelle cible.

Les rôles des principaux éléments ajoutés sont décrits ci-après.

- Dans le traitement Temps réel 6 :

  • La gestion spatio-temporelle 601 ("Space Time Management")
    o Transmet 602 la position azimut du lobe principal de l'antenne au traitement 21 des réponses asynchrones Mode S (voir ci-dessous) ;

- Dans le traitement du signal 7 :

  • On ajoute le traitement permanent des réponses Asynchrones Mode S (indépendamment des périodes d'écoutes associées aux interrogations) assurant la détection et le décodage des réponses asynchrones en exploitant séparément mais également les quatre diagrammes SUM, DIFF, CONT_Front et CONT_Back :

    o pour détecter toutes les réponses asynchrones reçues pour décoder ces réponses de type DF=17, en extraire les données du message et l'adresse Mode S ;
    o pour enrichir chaque réponse décodée de ses caractéristiques suivantes : heure de détection, azimut du lobe principal de l'antenne lors de la détection, dépointage de la réponse dans le lobe principale (tension monopulse) et puissances reçues sur SUM, DIFF, CONT_Front et CONT_Back, dans le cas d'une détection du squitter sur SUM la réponse peut-être traitée comme une réponse synchrone en lui attribuant une tension d'écartométrie qui la localise finement en azimut dans le lobe ;

  • on enrichit les réponses synchrones par la puissance mesurée sur SUM, DIFF, CONT_Front, l'heure de détection et l'azimut antenne.

- Dans le traitement dans le lobe principal :

  • Dans l'extracteur 901 du mode S :
    o on enrichit les plots Mode S de leurs réponses synchrones avec pour chacune la puissance mesurée sur SUM, DIFF, CONT_Front et l'azimut antenne.

- Dans le traitement multi tours 10 :

  • L'association 101 des plots et Pistage des cibles dans la couverture (« Association & Tracker ») :
    o transmet les pistes avec adresse Mode S avec les réponses enrichies de la puissance mesurée sur SUM, DIFF, CONT_Front et l'azimut antenne ;
  • on ajoute le traitement 22 des squitters ADS-B comportant :

    ◦ un traitement Déport ADS-B qui :

      ▪ assure le pistage des squitters ADS-B pour filtrer les fausses détections et faux décodages ;
      ▪ valide les pistes ADS-B en comparant avec les pistes synchrones du radar avant de les diffuser ;
      ▪ pour les pistes ADS-B non corrélées à des pistes synchrones du radar, car peut-être nouvelles (non encore détectées en « All Call » par le radar), requiert une interrogation sélective par le radar à sa position prédite lors du passage du diagramme SUM (si besoin sur plusieurs tours si échec).

    ◦ Un traitement spoofer ADS-B :

      ▪ pour les pistes ADS-B non détectables par des interrogations sélectives par le radar, la piste ADS-B est non validée et potentiellement considérée comme un spoofer ADS-B ;
      ▪ pour le calcul de la position azimutale du spoofer par corrélation des informations de puissances reçues sur SUM, DIFF , CONT_Front et CONT_Back de chaque détection des squitters ADS-B du spoofer avec les diagrammes mesurés (en usine ou sur site).

Le procédé selon l'invention comporte au moins deux étapes :

- une première étape de détection d'un spoofer ADS-B au niveau du radar ;
- une deuxième étape de pré-localisation en azimut de la position du spoofer ADS-B au niveau du radar ;

Cette deuxième étape peut être suivie d'une troisième étape :

- cette troisième étape effectuant une localisation affinée en azimut et en distance du spoofer ADS-B dans une configuration multi-radars, typiquement au niveau du centre de contrôle.

La détection puis la localisation d'un générateur de faux squitters ADS_B (spoofers) a pour but de ne pas prendre en compte ces informations diffusées dans les squitters tant au niveau des radars qu'au niveau des centres de contrôle, et a notamment également pour but de faire cesser au plus tôt l'activité de ce générateur en permettant à des unités d'intervenir sur le lieu de localisation. Etant donné que tous les équipements récepteurs de squitters ADS_B ne seront pas nécessairement aptes à mettre en œuvre l'invention, il faut agir vite.

Il est à noter que des utilisateurs réguliers de l'ADS_B sont les ACAS anti-collision à bord des avions, ces systèmes anti-collision cherchant également à utiliser les spoofers.

Les moyens pour détecter un spoofer ADS-B à l'aide d'un autre senseur actif (Radar ou senseur de type WAM), utilisés dans la première étape, sont connus de l'homme du métier. L'information de détection pourrait également être fournie par des moyens extérieurs au radar.

Néanmoins dans la version de réception ADS-B_in intégrée au radar, les moyens de détection ont pour objectif de :

- Valider les squitters ADS-B avant diffusion externe des données des squitters ADS-B en déport standard CAT021 vers les utilisateurs usuels ;
- De supprimer, ou marquer comme douteux, les squitters considérés comme « atypiques » du déport standard CAT021 vers les utilisateurs usuels, ces squitters pouvant être caractérisés notamment par :

  • Une non détection de cible ADS-B par le radar à une position diffusée par ces squitters ABS-B ;
  • Une incohérence de position entre la détection radar et la position ADS-B diffusée ;
  • Une incohérence de puissance selon la distance déclarée du radar en tenant compte des gains des diagrammes d'antenne radar ayant détecté le squitter ;
  • Une incohérence de contenu des données transmises entre les données extraites par le radar et celles diffusées par le squitter ADS-B ;
  • Un taux de squitters reçus différents du standard ADS-B (tel qu'appliqué par les autres cibles) ;

    - De déclarer la présence de spoofer ADS-B dans un nouveau déport dédié à cet effet vers un centre de supervision, a priori multi radars.

Il est à noter que les réponses ADS-B sont structurellement identiques aux réponses mode S synchrones destinées au radar, les données différant cependant entre les DF04, DF05, DF20 et DF21 d'une part et DF17 d'autre part. Il y a donc une similitude de traitement entre le récepteur radar et le récepteur ADS-B, assurant la fiabilité due au traitement commun.

- en forme d'onde : fréquence porteuse 1090MHz et en modulation du signal (PPM) ;
- en structure de message : même structure de message mode S (préambule, données et CRC) ;

Comme une cible radar en mode S, le squitter ADS-B est identifié par son adresse Mode S (volontairement commune aux radars modes S, WAM et récepteur ADS-B_in).

De plus, la fonction de réception des squitters ADS-B étant intégrée au radar, elle permet avantageusement :

- d'assurer qu'une réponse ADS-B reçue, le plus probablement, sur le diagramme CONT (ou CONT_front, CONT_back selon le type d'antenne) doit être interrogeable en mode synchrone par le diagramme SUM de la même antenne à la position azimut et distance où le squitter ADS-B se déclare être, puisque la différence de gain entre SUM et CONT est classiquement proche de 20 dB en moyenne en faveur de SUM ;
- d'assurer cette interrogation sélective avec une grande réactivité, évitant toute incertitude sur la position évolutive de la cible ayant émis le squitter ;

- de compléter, si besoin, cette première analyse par une analyse de :

    • la puissance reçue du squitter en fonction de sa distance déclarée au radar relativement aux autres cibles environnantes, en effet pour les autres cibles reçues en radar et ADS-B il est possible d'évaluer, selon sa distance et à des instants très proches (typiquement moins de 4 à 6 secondes selon la rotation du radar) l'écart moyen en puissance :

        o en réception synchrone par le radar avec le diagramme SUM ;
        o en réception asynchrone par le récepteur ADS-B probablement avec le diagramme CONT ;

    • le comportement de vol de celle-ci.

La deuxième étape, effectuant la pré-localisation en azimut du spoofer ADS-B, est propre à l'invention. Elle s'applique donc principalement aux squitters ADS-B que la première étape de détection a détectés comme spoofer ou marqués comme douteux. Pour des commodités de description, on pourra parler de localisation de spoofer ADS-B, étant bien entendu qu'il s'agit en fait de localisation du générateur de spoofer ADS-B. Théoriquement, la pré-localisation en azimut d'un spoofer ADS-B par un radar secondaire intégrant la réception ADS-B pourrait être effectuée à partir de la détection d'un squitter ADS-B dans le lobe principal du radar. Dans ce cas la fonction monopulse, associée à la détection du squitter, permet de mesurer l'azimut du générateur de squitter avec une précision identique à celle du radar avec un seul squitter. Cependant, cela n'est possible que si :

- la réception des squitters ADS-B est traitée comme les réponses synchrones du radar avec une détection sur tous les diagrammes, en ayant associé à chaque réponse (synchrone ou asynchrone) à la fois puissance par diagramme et la valeur monopulse attribuée à la réponse asynchrone qu'est le squitter ;
- la détection des squitters s'effectue bien dans le lobe principal (en gisement où la fonction monopulse est fonctionnelle) qui est de l'ordre de +/-1,2° (lobe 3dB classique), soit donc avec une probabilité temporelle de 2,4/360 égale 0,66%, donc très faible.

La probabilité par ce mode localisation est donc très faible bien que réelle. Avantageusement, dans cette deuxième étape, l'invention utilise un mode de localisation plus efficace, au sens probabilité temporelle notamment. Ce mode, détaillé ci-après, consiste à exploiter le fait que les squitters ADS-B rencontrent (ou échantillonnent) les diagrammes d'antenne à différents gisements, le gisement étant le dépointage par rapport à l'axe principal de l'antenne. La connaissance de l'antenne rapprochée de la mesure des puissances par diagrammes permet d'élaborer des hypothèses de gisement donc d'azimut par squitter reçu. L'accumulation de ces hypothèses permet de faire apparaître l'azimut le plus probable.

On détaille maintenant ce mode de localisation. Etant donné que les squitters ADS-B sont par nature asynchrones et sont reçus à tout moment par le radar, ils échantillonnent les diagrammes d'antenne à différents gisements. Plus précisément, ils sont captés par les diagrammes d'antenne à différents gisements.

En effet, chaque squitter ADS-B est aussi qualifié en amplitude selon les différents diagrammes (SUM, DIFF & CONT) de l'antenne ainsi que de l'heure et de l'azimut de l'antenne.

Il est connu que, pour une antenne secondaire ATC type ou même une antenne classique en IFF, les diagrammes sont très évolutifs en gisement. Il en résulte clairement que les puissances relatives SUM vs CONT et DIFF vs CONT sont des qualifiants du gisement auquel est reçu un squitter ADS-B. La prise en compte de l'azimut antenne au moment de la réception du squitter permet donc d'associer à chaque squitter une ou des hypothèses de positions possibles en azimut du générateur ADS-B source des squitters.

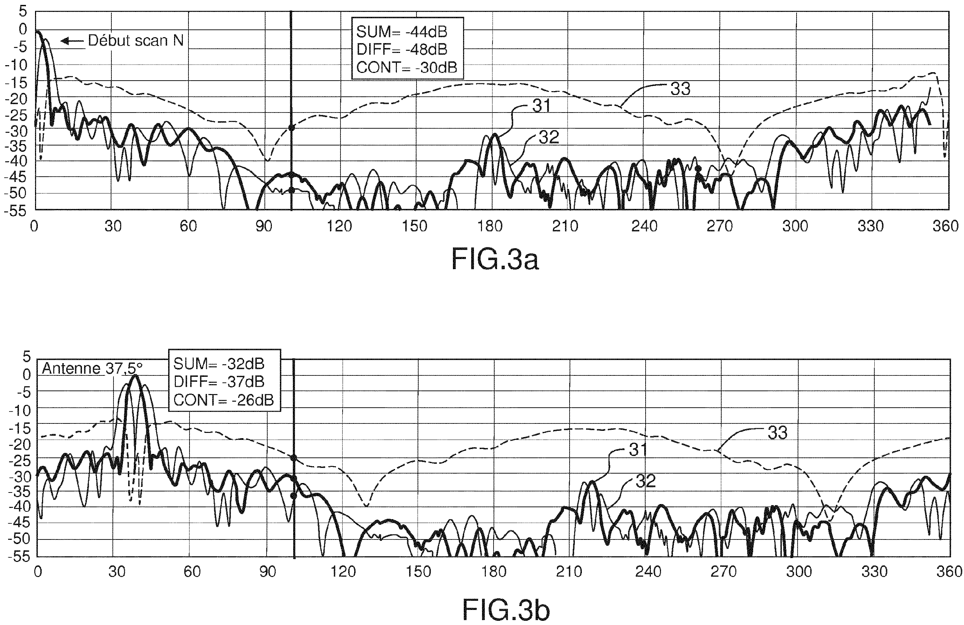

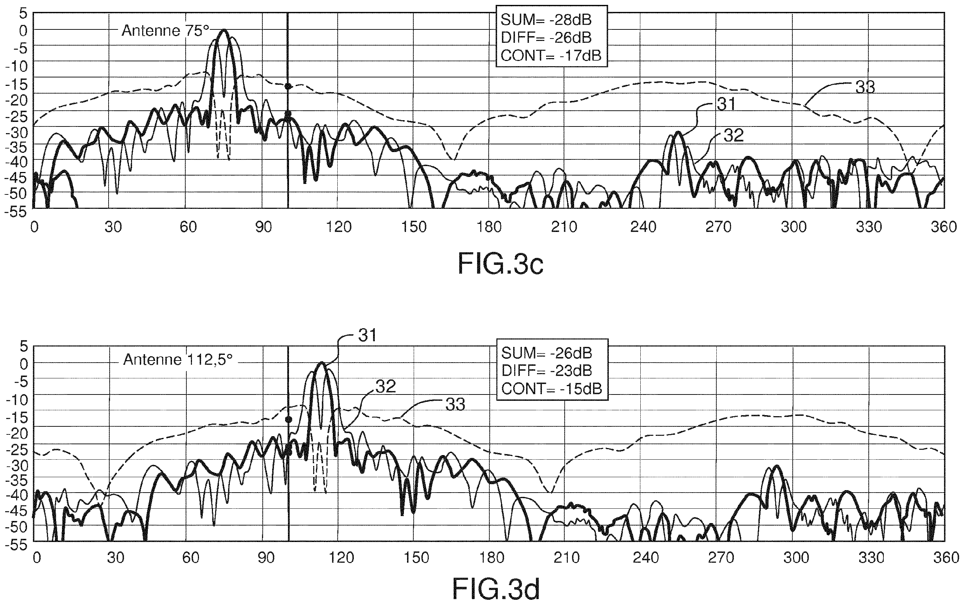

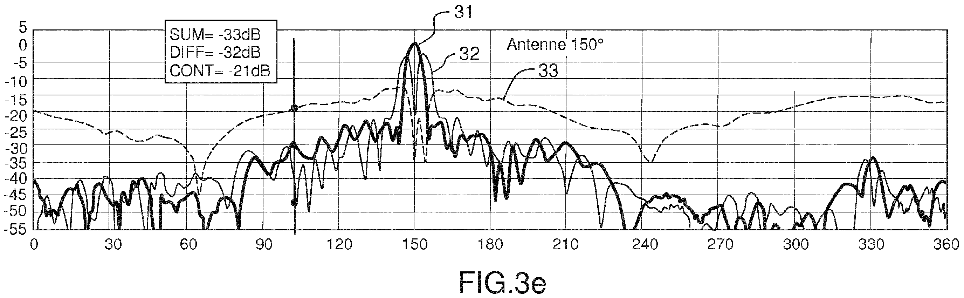

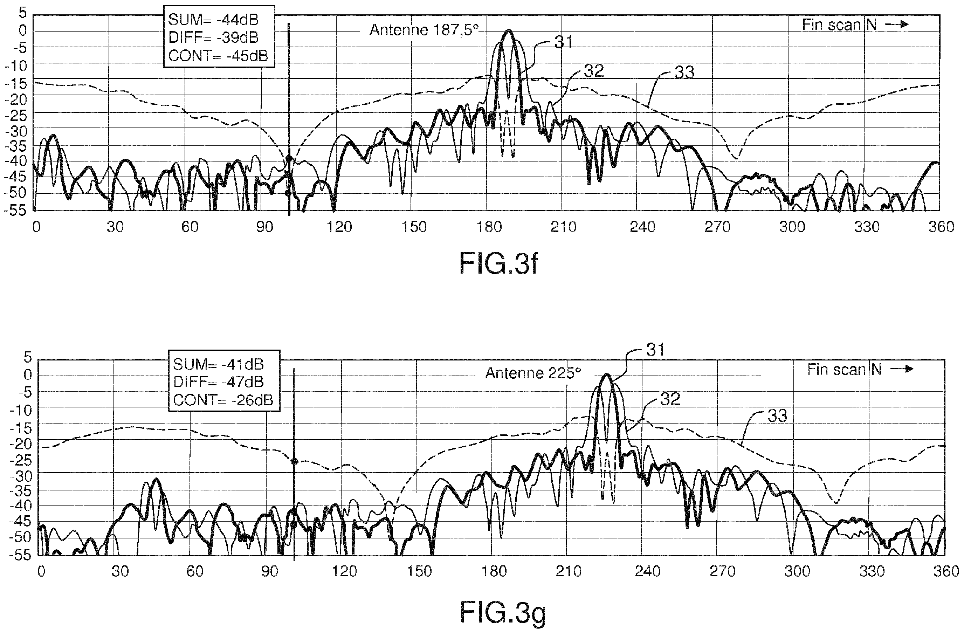

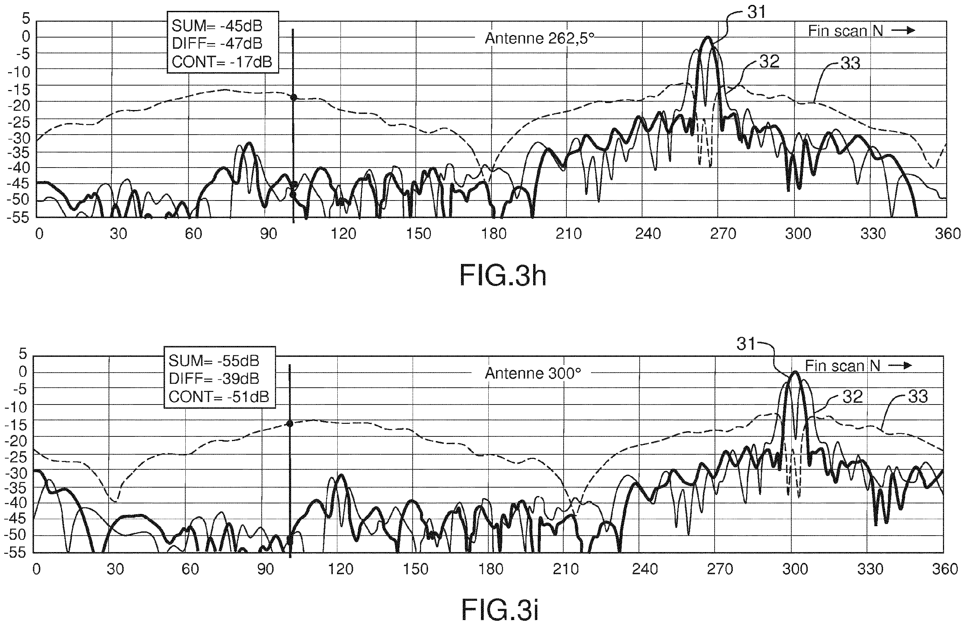

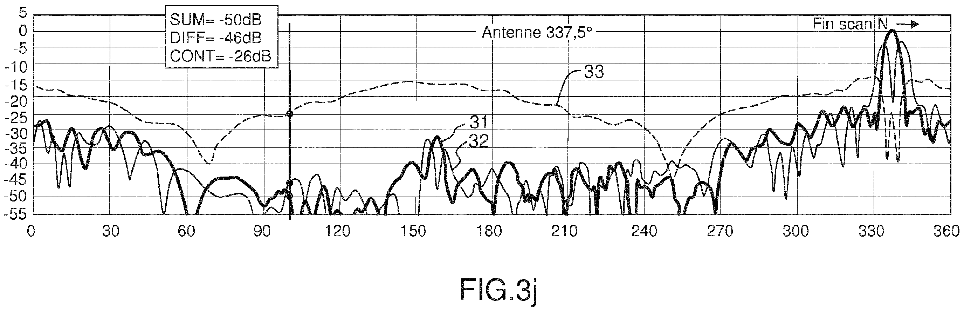

Les figures 3a à 3j illustrent, à titre d'exemple la méthode telle que décrite ci-dessus. Dans cet exemple le radar comporte une antenne IFF ayant typiquement trois diagrammes : SUM, DIFF et CONT. La période de rotation de l'antenne est de 4,8 secondes. Un spoofer ADS-B situé à l'azimut 100° émet périodiquement des squitters selon un rythme assez faible (période égale à 0,5 seconde).

Dans ce contexte, les figures 3a à 3j illustrent différentes localisations des squitters du spoofer sur les diagrammes SUM, DIFF et CONT tout au long d'un tour d'ordre N, les diagrammes tournant avec l'antenne. Les diagrammes SUM, DIFF et CONT sont respectivement référencés 31, 32, 33 sur les figures.

Dans cette représentation, le début d'un tour d'antenne correspond à la position de l'antenne où le diagramme SUM est centré à l'azimut 0°. Cette configuration est illustrée par le schéma de la figure 3a. Les schémas des figures suivantes 3b à 3e représentent successivement une position d'antenne (diagramme SUM centré à cet azimut), décalée en azimut de 37,5° (écart moyen en azimut entre 2 squitters ADS-B) puis les positions décalées de 75°, 112,5° et 150°, le spoofer restant toujours à l'azimut de 100°.

De même, les schémas des figures 3f à 3j représentent successivement la seconde partie du tour d'antenne successivement de haut en bas les positions d'antenne à 187,5°, 225°, 262,5°, 300° et 337,5°.

A chaque détection d'un squitter ADS-B, le procédé selon l'invention associe la position en azimut de l'antenne et le niveau reçu sur chacun des diagrammes d'antenne comme le montre le tableau ci-dessous à titre d'exemple :

| Azimut antenne | Gisement squitter Valeur à déterminer | SUM | DIFF | CONT |
|---|---|---|---|---|
| degrés | degrés | dB | dB | dB |
| 0 | +100 | -44 | -48 | -30 |
| 37,5 | +62,5 | -32 | -37 | -26 |
| 75,0 | +25 | -28 | -26 | -17 |
| 112,5 | -12,5 | -26 | -23 | -13 |
| 150,0 | -50 | -33 | -32 | -21 |
| 187,5 | -87,5 | -44 | -39 | -45 |
| 225,0 | -125 | -41 | -47 | -26 |
| 262,5 | -162,5 | -45 | -47 | -17 |
| 300,0 | -200 | -55 | -36 | -51 |
| 375,0 | -237,5 | -50 | -46 | -26 |

Selon la précision de pré-localisation en azimut requise du spoofer ADS-B, ces valeurs sont accumulées par squitter ADS-B à la fin du tour N à celles acquises lors des tours précédents pour la même cible.

On peut considérer que la précision de la pré-localisation azimut est liée :

- au nombre de squitters reçus (de préférence dans un temps court au cas où la cible évolue dans l'espace) ;
- à la puissance des squitters donc à priori à la distance entre le radar et le spoofer ;
- au taux de squitters que génère le spoofer (plus de points d'échantillonnage du diagramme) ;
- à l'utilisation dans l'étape suivante des diagrammes de l'antenne sur son site d'emploi pour prendre en considération les potentielles déformations des diagrammes dues à des réflexions ou multi trajets.

Au niveau du radar la seconde étape pour la pré-localisation en azimut d'un générateur de squitters ADS-B consiste donc à estimer sa position en azimut en exploitant leurs caractéristiques de puissance et la connaissance des diagrammes communs aux senseurs radar et ADS-B_in. Comme indiqué précédemment, les mesures peuvent être accumulées sur plusieurs tours en fonction de la précision de localisation souhaitée.

A partir de chaque triplet de mesure des puissances reçues sur CONT, SUM et DIFF (en dBm) on élabore aisément les couples de puissance relative de SUM par rapport à CONT (SUM/CONT) et DIFF par rapport à CONT (DIFF/CONT), en dB.

On recherche dans les diagrammes d'antenne les gisements donnant un couple de valeurs proches de N dB de celui obtenu pour chaque squitter. On associe alors la position en azimut de l'antenne au moment du squitter pour créer une, ou plusieurs, hypothèses de l'azimut du spoofer :

$$Az(Sp) = Az(A) + G(S\_ADS\text{-}B) \qquad (1)$$

où :

- Az(Sp) est une hypothèse de l'azimut du Spoofer ;
- Az(A) est l'azimut de l'antenne ;
- G(S_ADS-B) est l'estimation du gisement du squitter ADS-B.

L'azimut du générateur de spoofer est fonction de ces hypothèses. Plusieurs fonctions de probabilité connues par ailleurs peuvent être utilisées pour déterminer cet azimut.

La connaissance des diagrammes d'antennes SUM, DIFF et CONT est nécessaire pour former toutes ces estimations de gisement. A cet effet, ces diagrammes sont par exemple mesurés en usine où sont fabriquées les antennes, ou sur site où sont disposés les radars en opération. La mesure de ces diagrammes peut être effectuée avec une tolérance d'écart en puissance ajustable selon plusieurs facteurs, et avec une précision de définition des diagrammes de l'antenne selon plusieurs approches.

La valeur de la tolérance est liée à plusieurs facteurs tels que notamment :

- la précision de la mesure de puissance : plus elle est grande plus N peut-être faible, N étant la valeur de tolérance pour retenir une hypothèse de gisement ;
- la vitesse de convergence attendue pour trouver la pré-localisation en azimut, c'est-à-dire le nombre d'hypothèses accumulées avant de pouvoir émettre une prélocalisation azimut du spoofer ;
- la connaissance précise des diagrammes de l'antenne sur le site, c'est-à-dire en fait la précision accessible des diagrammes d'antenne (précision du relevé des diagrammes d'antenne).

Ce processus de localisation en azimut, effectué dans la troisième étape, peut bien sûr être exécuté simultanément par les différents radars secondaires du système lorsque M est supérieur à 1 où M étant le nombre de radars secondaires utilisés dans le système radars mettant en œuvre le procédé selon l'invention.

Pour chaque générateur de squitters ADS-B, ayant la même adresse mode S, on accumule les hypothèses d'azimut successives selon deux approches :

- soit adaptée pour des cibles évolutives en azimut sur un temps court qui peut être par exemple la durée d'un ou quelques tours d'antenne (le cibles évolutives étant par exemple des générateurs de spoofers embarqués sur des drones à courte distance), dans ce cas il est préférable de faire plusieurs pré-localisations indépendantes peu précises et ensuite de pister la cible pour évaluer son mouvement et prédire sa prochaine position en azimut ;
- soit adaptée pour une cible stable sur un temps plus long (nombreux tours d'antenne, 10 tours par exemple) pour avoir une meilleure précision.

Pour localiser grossièrement un spoofer en mouvement on peut choisir une précision d'azimut avec pas moyen, de 0,5° à 1° par exemple. Pour localiser finement un spoofer fixe, on peut choisir un pas très fin : 0,1° par exemple. Ce processus peut bien sûr être exécuté simultanément pour les deux approches afin de s'adapter à tout type d'évolution de spoofer.

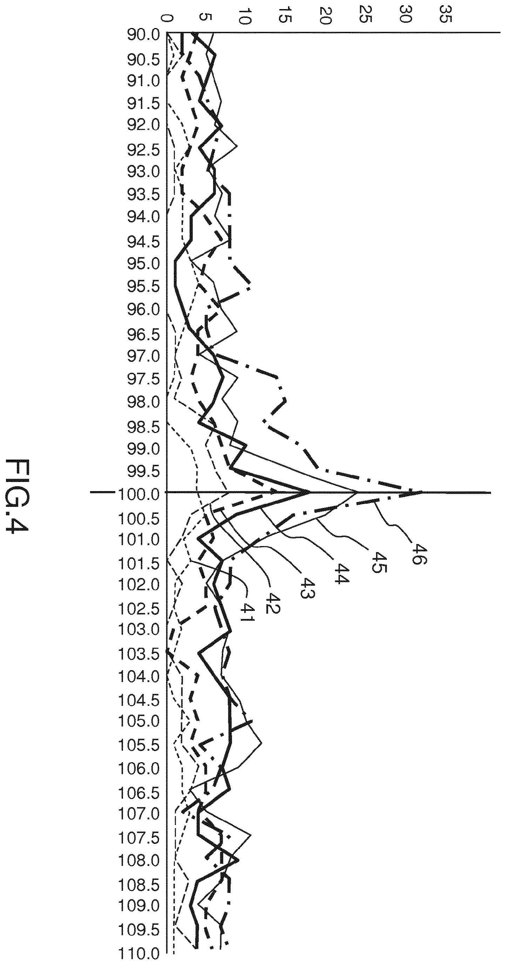

La figure 4 illustre la précision de localisation d'un spoofer fixe, obtenue par le traitement du signal radar dans cette deuxième étape, en fonction du nombre de squitters détectés, c'est-à-dire en fonction du nombre d'hypothèses d'azimut de ces squitters accumulées sur un ou plusieurs tours d'antenne.

Pour résumer, lors de la réception d'un squitter ADS-B, celui-ci est enrichi des mesures de puissance relative entre les diagrammes d'antenne SUM, DIFF et CONT. En corrélant ceux-ci à ceux des diagrammes d'antenne, on obtient plusieurs hypothèses de dépointage du spoofer par rapport à l'axe principal de l'antenne (ce dépointage étant le gisement) au moment de la réception du squitter. On calcule alors, en utilisant l'azimut de l'antenne, les différentes hypothèses d'azimut du spoofer (voir relation (1) ci-dessus).

En accumulant pour chaque squitter de ce même spoofer (ayant même adresse mode S) les différentes hypothèses d'azimut, on peut déterminer l'azimut le plus probable. Ainsi, plus le nombre de squitters du spoofer reçus est important, plus la localisation de l'azimut de ce dernier se précise comme le montre la figure 4.

Le spoofer considéré dans cette figure 4 est celui des figures 3a et 3b, positionné à l'azimut 100°. La figure 4 présente les pics de corrélation des hypothèses d'azimut obtenus pour différents nombres de squitters, en fonction de l'azimut. Elle présente six tracés de corrélation 41, 42, 43, 44, 45, 46 correspondant respectivement à 10, 20, 30, 40, 50 et 60 squitters. Dans cet exemple, on voit que l'on obtient une exactitude exploitable de localisation à partir de 30 squitters (tracé 43) et un affinement de la localisation en fonction de l'augmentation des squitters (tracés 44 à 46).

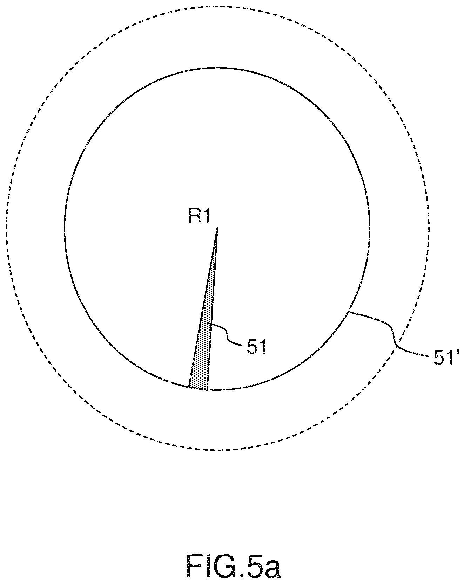

Les figures 5a à 5c illustrent la troisième étape du procédé selon l'invention. Le principe de cette troisième étape consiste à croiser les pré-localisations de plusieurs radars (obtenues dans la deuxième étape), pour :

- affiner la position en azimut du spoofer ADS-B (vis-à-vis des radars), si la position en azimut obtenue dans la deuxième étape est considérée comme insuffisante ;
- calculer la distance du spoofer ADS-B (vis-à-vis des radars) ;

en réalisant l'intersection des pré-localisations des radars, ces pré-localisations étant pondérées de :

- la qualité de la pré-localisation (niveau de pic de corrélation) ;
- l'incertitude sur cette pré-localisation au niveau de chacun des radars (niveaux relatifs des pics de corrélation obtenus pour les radars) ;
- la distance du spoofer aux différents radars.

La figure 5a illustre la localisation en azimut du spoofer pour un premier radar positionné en un point R1. L'azimut obtenu par ce premier radar est représenté par un secteur angulaire 51 à l'intérieur de la zone de couverture 51' du radar.

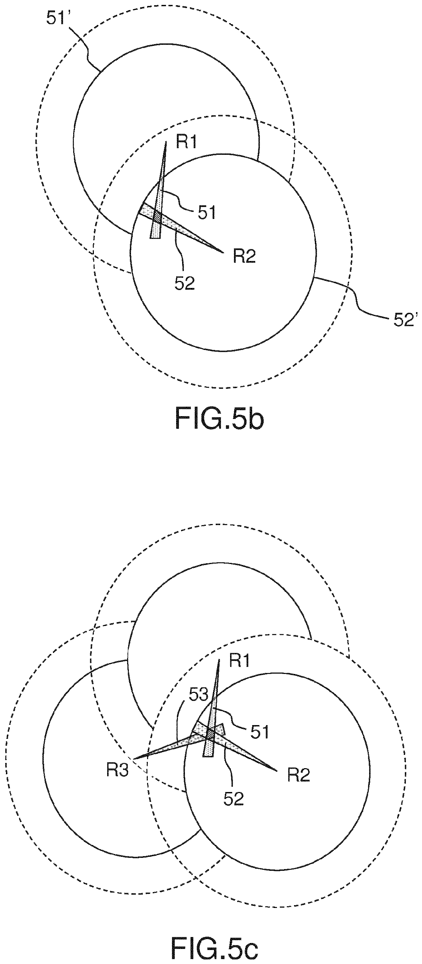

La figure 5b ajoute un deuxième radar et la représentation en azimut du spoofer vis-à-vis de ce deuxième radar. Ce deuxième radar est positionné à un point R2. L'azimut du spoofer est représenté par un secteur angulaire 52 à l'intérieur de la zone de couverture 52' du radar. L'azimut affiné du spoofer est l'intersection des deux azimuts, c'est-à-dire des deux secteurs angulaires 51, 52. Cette intersection fournit également la distance du spoofer par rapport aux radars, la cible étant positionnée à l'intérieur de cette intersection.

La figure 5c ajoute un troisième radar. Ce troisième radar est positionné à un point R3. L'azimut du spoofer est représenté par un secteur angulaire 53 à l'intérieur de la zone de couverture 53' du radar. L'azimut affiné du spoofer est l'intersection des trois azimuts, c'est-à-dire des trois secteurs angulaires 51, 52, 53. Cette intersection améliore également la précision de mesure distance du spoofer par rapport aux radars.

Classiquement, les mesures affinées d'azimut et de distance sont calculées à partir des mesures d'azimut (secteurs angulaires 51, 52, 53) fournies par les radars à un centre de calcul, qui peut être logé dans les moyens de traitement d'un des radars R1, R2, R3 ou dans calculateur indépendant. Les données d'azimut sont transmises par les moyens de communications connus par ailleurs.

Il est aussi possible de prélocaliser la cible en élévation au niveau du radar (pour à terme la localiser en altitude par un système multi radars dans un second temps conformément aux figures 5a à 5c, ce qui est adapté dans le cas de drone équipé d'un spoofer).

Pour cela les hypothèses d'azimut sont effectuées en parallèle en exploitant plusieurs coupes en élévation des diagrammes d'azimut selon le même procédé que décrit ci-avant et ceci indépendamment pour chaque coupe.

A la fin de la période d'intégration des squitters, en retenant le pic de corrélation le plus élevé parmi les différentes coupes en élévation on définit simultanément une pré localisation azimut et élévation.

Il est à noter que le principe mis en œuvre consiste toujours à supposer que pendant la durée du temps d'intégration des squitters avant prise de décision sur la pré-localisation en azimut et en élévation de la cible celle-ci n'a pas évolué ni en azimut ni en élévation. Ceci reste donc valable pour des cibles fixes ou pas trop évolutives, typiquement au plus quelques tours d'antenne du radar : le drone ne doit pas être trop proche du radar afin que sa vitesse azimutale vue par le senseur reste moyenne.

L'invention peut également avantageusement être utilisée pour détecter et localiser certains cas d'émetteur ADS-B défaillants. En particulier, l'invention peut être utilisée pour accroître la sécurité dans le contrôle du trafic aérien (ATC) notamment pour lever ou confirmer des doutes sur des squitters présentant des écarts de position. En particulier, les informations de pré-localisation en azimut réalisées dans la deuxième étape peuvent être transmises à un centre ATC sur un lien dédié aux alertes ADS-B en cas d'incohérence pour accroître la sécurité.

L'invention a été décrite pour une antenne rotative. Il est également possible de prévoir une antenne non rotative dont le faisceau se déplace en azimut par des pointages successifs aléatoires.

## Revendications

1. Procédé de détection et de localisation de générateurs de spoofers ADS-B par un système radars comportant au moins un radar secondaire, un spoofer ADS-B étant un faux squitter ADS-B, un squitter ADS-B étant un signal d'information de position d'aéronef émise à destination de récepteurs dont les récepteurs des radars dudit système, lesdits squitters ADS-B étant détectés au cours du temps à différents gisements de l'antenne (1), ledit procédé étant **caractérisé en ce qu'**il comporte, pour chaque radar secondaire, au moins les étapes suivantes :

     - une première étape de détection d'un spoofer ADS-B ;
     - une deuxième étape de localisation (22) de la position en azimut dudit générateur de spoofer ADS-B, ladite deuxième étape comportant les opérations suivantes :

          • mesure de l'azimut de l'antenne du radar secondaire et des puissances reçues sur les diagrammes somme, différence et contrôle de l'antenne lors de la détection d'un squitter ADS-B ;
          • génération et stockage d'au moins une hypothèse d'azimut dudit spoofer pour chaque squitter ADS-B détecté, ladite hypothèse étant égale à la somme de l'azimut de ladite antenne et d'une hypthèse de gisement estimé dudit spoofer, ledit gisement estimé étant **caractérisé par** le rapprochement entre le couple des rapports de la puissance reçue sur le diagramme somme sur la puissance reçue sur le diagramme de contrôle d'une part et par le rapport de la puissance reçue sur le diagramme différence sur la puissance reçue sur le diagramme de contrôle d'autre part et les mêmes couples pour les différents gisements possibles connus de l'antenne, et que ladite deuxième étape réalisant en outre une accumulation desdites hypothèses sur une période de temps donnée, l'azimut dudit spoofer ADS-B étant fonction desdites hypothèses.

2. Procédé selon la revendication 1, **caractérisé en ce que** ledit système radars comportant au moins deux radars secondaires, ledit procédé comprend une troisième étape de localisation en distance dudit générateur de spoofer ADS-B, ladite troisième étape croisant les secteurs angulaires d'azimut (51, 52, 53) de chaque radar secondaire, la distance dudit générateur de spoofer ADS-B à un radar étant la distance de ladite intersection audit radar, un secteur angulaire d'azimut étant un secteur angulaire centré sur l'azimut obtenu dans ladite deuxième étape.

3. Procédé selon la revendication 2, **caractérisé en ce que** l'écart angulaire de ladite intersection donne la précision de localisation en azimut dudit générateur de spoofer ADS-B.

4. Procédé selon l'une quelconque des revendications précédentes, **caractérisé en ce que** la génération desdites hypothèses d'azimut utilise plusieurs tolérances d'écart parmi :

   - la précision de mesure de ladite puissance ;
   - le nombre d'hypothèses accumulées ;
   - la précision du relevé des diagrammes d'antenne.

5. Procédé selon l'une quelconque des revendications précédentes, **caractérisé en ce que** lesdites hypothèses d'azimut de spoofer ADS-B utilisent en parallèle plusieurs précisions en azimut desdits diagrammes d'antenne, l'azimut étant défini selon des pas, le pas d'azimut pour localiser un générateur de spoofer en mouvement étant plus important que pour localiser un générateur fixe.

6. Procédé selon l'une quelconque des revendications précédentes, **caractérisé en ce que** dans la dite deuxième étape, lesdites hypothèses sont accumulées :

   - sur un temps donné pour localiser un générateur de spoofer ADS-B fixe ;
   - sur un temps plus court pour localiser un générateur de spoofer ADS-B en mouvement.

7. Procédé selon l'une quelconque des revendications précédentes, **caractérisé en ce que**, dans ladite deuxième étape, lesdites hypothèses dudit spoofer ADS-B au niveau d'un radar sont élaborées à la fois en azimut et en élévation en exploitant en parallèle plusieurs hypothèses basées sur plusieurs diagrammes d'antenne en azimut selon différentes coupes en élévation.

8. Procédé selon la revendication 7 dans sa dépendance selon la revendication 2, **caractérisé en ce que** dans ladite troisième étape, ledit système comportant au moins trois radars secondaires, ledit spoofer ADS-B est localisé en azimut, distance et altitude par l'intersection de secteurs angulaires solides de chaque radar secondaire, un secteur angulaire solide étant un secteur d'angle solide centré sur l'azimut et sur l'élévation obtenus dans ladite deuxième étape.

9. Procédé selon l'une quelconque des revendications 2 à 8, **caractérisé en ce que** dans ladite troisième étape la localisation dudit spoofer ADS-B est effectuée en fonction de :

   - la qualité de la localisation définie à ladite deuxième étape ;
   - l'incertitude sur ladite localisation définie par chacun desdits radars ;
   - la distance dudit spoofer ADS-B vis-à-vis de chacun desdits récepteurs.

10. Procédé selon l'une quelconque des revendications précédentes, **caractérisé en ce que** ladite première étape est mise en œuvre par des moyens de détection extérieurs audit systèmes radars.

11. Radar secondaire, **caractérisé en ce qu'**il est apte à mettre en œuvre ladite première étape et ladite deuxième étape du procédé selon l'une quelconque des revendications précédentes.

12. Système de radars secondaires, **caractérisé en ce qu'**il comporte au moins deux radars secondaires selon la revendication 11 et des moyens de traitement aptes à communiquer avec lesdits radars et aptes à mettre en œuvre ladite troisième étape du procédé selon l'une quelconque des revendications 3 à 10 dans leur dépendance selon la revendication 2

13. Système selon la revendication 12, **caractérisé en ce que** lesdits moyens de traitement sont incorporés dans un desdits radars.

**Patentansprüche**

1. Verfahren zur Detektion und Lokalisation von ADS-B-Spoofer-Generatoren durch ein Radarsystem, umfassend mindestens einen Sekundärradar, wobei ein ADS-B-Spoofer ein falscher ADS-B-Squitter ist, wobei eine ungewollte ADS-B-Transponderauslösung ein Luftfahrzeug-Positionsinformationssignal ist, das an Empfänger übertragen wird, einschließlich der Empfänger der Radare des Systems, wobei der ADS-B-Squitter im Laufe der Zeit bei verschiedenen Antennenpeilwinkeln (1) erkannt werden, wobei das Verfahren **dadurch gekennzeichnet ist, dass** es für jeden Sekundärradar mindestens die folgenden Schritte umfasst:

   - einen ersten Schritt der Detektion eines ADS-B-Spoofers;
   - einen zweiten Schritt der Lokalisation (22) der Azimutposition des ADS-B-Spoofer-Generators, wobei der zweite Schritt die folgenden Operationen umfasst:

      • Messen des Azimuts der Antenne des Sekundärradars und der empfangenen Leistungen auf den Summen-, Differenz- und Kontrolldiagrammen der Antenne bei Detektion einer ungewollten ADS-B-Transponderauslösung;
      • Generieren und Speichern mindestens einer Azimuthypothese des Spoofers für jeden erkannten ADS-B-Squitter, wobei die Hypothese gleich der Summe des Azimuts der Antenne und einer geschätzten Peilwinkelhypothese des Spoofers ist, wobei der geschätzte Peilwinkel durch die Annäherung zwischen dem Paar von Verhältnissen der empfangenen Leistung auf dem Summendiagramm zu der empfangenen Leistung auf dem Kontrolldiagramm einerseits und dem Verhältnis der empfangenen Leistung auf dem Differenzdiagramm zu der empfangenen Leistung auf dem Kontrolldiagramm andererseits und den gleichen Paaren für die verschiedenen möglichen bekannten Antennenpeilwinkel gekennzeichnet ist, und dadurch, dass

   der zweite Schritt ferner eine Akkumulation der Hypothesen über einen gegebenen Zeitraum ausführt, wobei der Azimut des ADS-B-Spoofers eine Funktion der Hypothesen ist.

2. Verfahren nach Anspruch 1, **dadurch gekennzeichnet, dass** das Radarsystem mindestens zwei Sekundärradare umfasst, wobei das Verfahren einen dritten Schritt der Distanzlokalisation des ADS-B-Spoofer-Generators umfasst, wobei der dritte Schritt die Azimutwinkelsektoren (51, 52, 53) jedes Sekundärradars kreuzt, wobei die Distanz des ADS-B-Spoofer-Generators zu einem Radar die Distanz der Kreuzungsstelle mit dem Radar ist, wobei ein Azimutwinkelsektor ein Winkelsektor ist, das auf den Azimut zentriert ist, der in dem zweiten Schritt erhalten wurde.

3. Verfahren nach Anspruch 2, **dadurch gekennzeichnet, dass** der Winkelabstand der Kreuzungsstelle die Genauigkeit der Azimutlokalisation des ADS-B-Spoofer-Generators bereitstellt.

4. Verfahren nach einem der vorhergehenden Ansprüche,
   **dadurch gekennzeichnet, dass** die Generierung der Azimuthypothesen mehrere Abstandstoleranzen der Folgenden verwendet:

   - die Messgenauigkeit der Leistung;
   - die Anzahl der akkumulierten Hypothesen;
   - die Genauigkeit der Anzeige der Antennendiagramme.

5. Verfahren nach einem der vorhergehenden Ansprüche,
   **dadurch gekennzeichnet, dass** die Azimuthypothesen des ADS-B-Spoofers parallel mehrere Azimutgenauigkeiten der Antennendiagramme verwenden, wobei der Azimut in Abstandsintervallen definiert wird, wobei der Azimutabstandsintervall zum Lokalisieren eines sich bewegenden Spoofer-Generators größer ist als zum Lokalisieren eines feststehenden Generators.

6. Verfahren nach einem der vorhergehenden Ansprüche,
   **dadurch gekennzeichnet, dass** im zweiten Schritt die Hypothesen folgendermaßen akkumuliert werden:

- über eine gegebene Zeit zum Lokalisieren eines feststehenden ADS-B-Spoofer-Generators;
- über eine kürzere Zeit zum Lokalisieren eines sich bewegenden ADS-B-Spoofer-Generators.

7. Verfahren nach einem der vorhergehenden Ansprüche, **dadurch gekennzeichnet, dass** in dem zweiten Schritt die Hypothesen des ADS-B-Spoofers an einem Radar gleichzeitig als Azimut und Hebung unter paralleler Auswertung mehrerer Hypothesen basierend auf mehreren Azimutantennendiagrammen gemäß verschiedenen Höhenquerschnitten bearbeitet werden.

8. Verfahren nach Anspruch 7, in Abhängigkeit von Anspruch 2, **dadurch gekennzeichnet, dass** in dem dritten Schritt das System mindestens drei Sekundärradare umfasst, wobei der ADS-B-Spoofer in Bezug auf Azimut, Distanz und Höhe durch Überschneiden von unveränderlichen Winkelsektoren eines jeden Sekundärradars lokalisiert wird, wobei ein unveränderlicher Winkelsektor ein Sektor eines unveränderlichen Winkels ist, der auf den Azimut und die Hebung zentriert ist, die in dem zweiten Schritt erhalten wurden.

9. Verfahren nach einem der Ansprüche 2 bis 8, **dadurch gekennzeichnet, dass** in dem dritten Schritt die Lokalisation des ADS-B-Spoofers durchgeführt wird in Abhängigkeit von:

- der Qualität der Lokalisation, die im zweiten Schritt definiert wird;
- der Unsicherheit der von jedem der Radare definierten Lokalisation;
- der Distanz des ADS-B-Spoofers zu jedem der Empfänger.

10. Verfahren nach einem der vorhergehenden Ansprüche, **dadurch gekennzeichnet, dass** der erste Schritt durch außerhalb der Radarsysteme liegende Detektionsmittel ausgeführt wird.

11. Sekundärradar, **dadurch gekennzeichnet, dass** er in der Lage ist, den ersten Schritt und den zweiten Schritt des Verfahrens nach einem der vorhergehenden Ansprüche auszuführen.

12. Sekundärradarsystem, **dadurch gekennzeichnet, dass** es mindestens zwei Sekundärradare nach Anspruch 11 und Behandlungsmittel umfasst, die in der Lage sind, mit den Radaren zu kommunizieren, und in der Lage sind, den dritten Schritt des Verfahrens nach einem der Ansprüche 3 bis 10 in Abhängigkeit von Anspruch 2 auszuführen.

13. System nach Anspruch 12, **dadurch gekennzeichnet, dass** die Behandlungsmittel in einem der Radare inkorporiert sind.

**Claims**

1. Method for the detection and location of generators of ADS-B spoofers by a radar system comprising at least one secondary radar, an ADS-B spoofer being a false ADS-B squitter, an ADS-B squitter being an aircraft position information signal transmitted to receivers including the receivers of the radars of said system, said ADS-B squitters being detected over time at different bearings of the antenna (1), said method being **characterized in that** it comprises, for each secondary radar, at least the following steps:

- a first step of detection of an ADS-B spoofer;
- a second step of location (22) of the azimuth position of said ADS-B spoofer generator, said second step comprising the following operations:

• measurement of the azimuth of the antenna of the secondary radar and of the received powers on the sum, difference and control patterns of the antenna upon the detection of an ADS-B squitter;
• generation and storage of at least one assumption of azimuth of said spoofer for each ADS-B squitter detected, said assumption being equal to the sum of the azimuth of said antenna and of an assumption of estimated bearing of said spoofer, said estimated bearing being **characterized by** the convergence between the pair of the ratios of the received power on the sum pattern to the received power on the control pattern on the one hand and by the ratio of the received power on the difference pattern to the received power on the control pattern on the other hand, and the same pairs for the different possible known bearings of the antenna,

said second step further performing an accumulation of said assumptions over a given period of time, the azimuth of said ADS-B spoofer being a function of said assumptions.

2.  Method according to claim 1, **characterized in that**, said radar system comprising at least two secondary radars, said method comprises a third step of location of said ADS-B spoofer generator in terms of distance, said third step crossing the azimuth angular segments (51, 52, 53) of each secondary radar, the distance from said ADS-B spoofer generator to a radar being the distance from said intersection to said radar, an azimuth angular segment being an angular segment centred on the azimuth obtained in said second step.

3.  Method according to claim 2, **characterized in that** the angular deviation of said intersection gives the accuracy of location in terms of azimuth of said ADS-B spoofer generator.

4.  Method according to any one of the preceding claims,
    **characterized in that** the generation of said azimuth assumptions uses several deviation tolerances out of:

    - the accuracy of measurement of said power;
    - the number of assumptions accumulated;
    - the accuracy of the reading of the antenna patterns.

5.  Method according to any one of the preceding claims,
    **characterized in that** said assumptions of ADS-B spoofer azimuth use, in parallel, several accuracies in terms of azimuth of said antenna patterns, the azimuth being defined according to pitch intervals, the azimuth pitch interval to locate a spoofer generator in motion being greater than for locating a fixed generator.

6.  Method according to any one of the preceding claims,
    **characterized in that**, in said second step, said assumptions are accumulated:

    - over a given time, to locate a fixed ADS-B spoofer generator;
    - over a shorter time, to locate an ADS-B spoofer generator in motion.

7.  Method according to any one of the preceding claims,
    **characterized in that**, in said second step, said assumptions of said ADS-B spoofer at the level of a radar are worked out both in azimuth and in elevation by exploiting in parallel several assumptions based on several azimuth antenna patterns according to different cuts in elevation.

8.  Method according to claim 7, when dependent on claim 2, **characterized in that**, in said third step, said system comprising at least three secondary radars, said ADS-B spoofer is located in terms of azimuth, distance and altitude by the intersection of solid angular segments of each secondary radar, a solid angular segment being a segment of solid angle centred on the azimuth and on the elevation obtained in said second step.

9.  Method according to any one of claims 2 to 8, **characterized in that** in said third step the location of said ADS-B spoofer is performed as a function of:

    - the quality of the location defined in said second step;
    - the uncertainty on said location defined by each of said radars;
    - the distance of said ADS-B spoofer with respect to each of said receivers.

10. Method according to any one of the preceding claims,
    **characterized in that** said first step is implemented by detection means external to said radar system.

11. Secondary radar, **characterized in that** it is capable of implementing said first step and said second step of the method according to any one of the preceding claims.

12. System of secondary radars, **characterized in that** it comprises at least two secondary radars according to claim 11 and processing means capable of communicating with said radars and capable of implementing said third step of the method according to any one of claims 3 to 10 when dependent on claim 2.

13. System according to claim 12, **characterized in that** said processing means are incorporated in one of said radars.

FIG.1

## Eléments rayonnants 1

| Diagram SUM | Diagram DIFF | Diagram CONT_Front | Diagram CONT_Back |

11 · 12 · 15 · 14

2

| Azimut | SUM | DIFF | CONT_Front | CONT_Back |

201

3

1030 MHz    1090 MHz

4    5    7    6

SUM CONT    SUM DIFF CONT Front CONT Back

IFF Interro-gation Scheduling

SSR Interro-gation Scheduling

Mode S Interro-gation Scheduling

Mode S Synchro-nous Reply Processing

SSR Synchro-nous Reply Processing

IFF Synchro-nous Reply Processing

Mode S ADS-B Asynchro-nous Reply Processing

601

Radar real time Space Time Management

21 Main beam antenne azimuth

Mode S ADS-B caracteri stics

602

Enhanced Reply    Reply

Mode S & SSR & IFF Radar Beam Scheduling

901

Mode S Extractor | SSR Extractor | IFF Extractor

9

8

Enhanced Reply    Plot

Mode S & SSR & IFF Task Scan management

101

Mode S & SSR & IFF Association & Tracker

Mode S Reply characteristics

New ADS-B squitter Selective Interrogation request

22

Track

ADS-B squitter Tracker ADS-B Spoofer pre-localization

10

Radar Tasks Request

Confirmed PLOTS & TRACKS

Validaded ADS-B output

ADS-B Spoofer output

## FIG.2

RAYONNEMENT

TRAITEMENT RF

TRAITEMENT TEMPS REEL

TRAITEMENT LOBE

TRAITEMENT MULTI TOURS

UTILISATEURS EXTERNES

FIG.3a

FIG.3b

FIG.3c

FIG.3d

FIG.3e

FIG.3f

FIG.3g

FIG.3h

FIG.3i

23

FIG.3j

EP 3 588 137 B1

FIG.4

R1

51

51'

FIG.5a

FIG.5b

FIG.5c